# FASCICULE DE BREVET EUROPEEN

(11) **EP 2 546 085 B1**
(45) Date de publication et mention de la délivrance du brevet: **17.10.2018**
(21) Numéro de dépôt: 12172259.9
(22) Date de dépôt: 15.06.2012
(51) Int. Cl.: B60H 3/06, B01D 46/00, B01D 46/10

(54) **Support de filtre, module de filtre et installation de ventilation ou climatiseur de véhicule**
Filterhalterung, Filtermodul und Belüftungs- oder Klimaanlage eines Fahrzeugs
Filter mounting, filter module and ventilation or air-conditioning installation for a vehicle

(30) Priorité: 13.07.2011 DE 102011107165
(43) Date de publication de la demande: 16.01.2013
(73) Titulaire: Valeo Klimasysteme GmbH, 96476 Bad Rodach (DE)
(72) Inventeur: Koch, Peter, 96476 Bad Rodach (DE)
(74) Mandataire: Metz, Gaëlle

(56) Documents cités:
- EP-A1- 0 608 034
- DE-U1- 8 617 790
- FR-A1- 2 722 453
- US-A- 2 002 936

## Description

L'invention concerne un support de filtre et un module de filtre pour une installation de ventilation ou un climatiseur de véhicule, le support de filtre présentant une surface d'appui pour le positionnement axial d'un filtre à air dans le support de filtre et d'une ouverture de ventilateur espacée, dans une direction axiale, de la surface d'appui, pour le raccordement d'un ventilateur de l'installation de ventilation ou du climatiseur de véhicule. L'invention concerne en outre une installation de ventilation ou un climatiseur de véhicule avec un tel module de filtre. Un support de filtre dans un véhicule est montré dans FR 2 722 453 A1. De tels supports de filtres et modules de filtres sont connus dans l'état de la technique, la surface d'appui comprenant des nervures qui s'étendent depuis la région de bord du filtre jusqu'à la région centrale du filtre, afin de supporter le filtre tant dans sa région de bord que dans sa région centrale. De cette manière, une flexion du filtre et notamment une pénétration de matériau du filtre dans le ventilateur, par exemple du fait de la dépression produite par le ventilateur, sont évitées. A cause de l'agencement des nervures et de la surface d'appui, l'écoulement d'air dans le support de filtre est perturbé.
L'objet de l'invention est de fournir un support de filtre et un module de filtre avec un flux d'air amélioré à travers le filtre et le support de filtre, ainsi qu'une installation de ventilation et/ou un climatiseur de véhicule correspondants.

Conformément à l'invention, cet objet est réalisé par un support de filtre du type générique, la surface d'appui s'appliquant exclusivement dans une région de bord radiale d'un espace recevant le filtre à air, et un élément de butée étant prévu, lequel est disposé dans la direction axiale entre la surface d'appui et l'ouverture de ventilateur et limite un mouvement du filtre à air dans la direction axiale. Du fait que la surface d'appui ne fournit un support au filtre à air que dans sa région de bord, un flux d'air optimisé à travers le filtre à air est possible. Une déformation excessive du filtre à air dans la direction axiale, par exemple dans des conditions de fonctionnement extrêmes comme dans le cas d'un filtre trempé ou fortement encrassé, est limitée par l'élément de butée qui n'intervient qu'à ce stade, de sorte que notamment une pénétration de matériau du filtre dans l'ouverture du ventilateur est évitée. En raison de l'agencement de l'élément de butée, lors de l'installation d'un filtre à air dans le support de filtre, celui-ci s'applique, dans des conditions de fonctionnement normales, seulement contre la surface d'appui du support de filtre et permet ainsi un bon flux d'air à travers le filtre à air.

Par direction axiale, il faut entendre ici la direction de la liaison d'écoulement entre le filtre et l'ouverture de ventilateur. D'autres composants du support de filtre, le filtre, ou des composants d'une installation de ventilation ou d'un climatiseur de véhicule correspondants, peuvent par exemple présenter des axes de symétrie qui peuvent aussi être disposés obliquement par rapport à la direction axiale de la liaison d'écoulement.
Avantageusement, le filtre s'applique uniquement au niveau de sa région de bord, notamment uniquement avec son cadre de filtre, contre la surface d'appui. La surface d'appui peut notamment être réalisée sans saillies en projection radiale vers l'intérieur. On obtient une production simple et économique en réalisant le support de filtre sous forme de composant intégral d'une seule pièce, de préférence sous forme de composant moulé par injection. De préférence, l'élément de butée est espacé dans la direction axiale de 3 à 5 mm de la surface d'appui pour le filtre à air. La distance est avantageusement choisie de telle sorte qu'un filtre incorporé, même dans le cas de légères vibrations, par exemple du fait de différences de pression dans le ventilateur dans des conditions de fonctionnement normales, ne vienne pas buter contre l'élément de butée, de sorte que les bruits de claquement soient réduits.

L'élément de butée peut être disposé, vu dans la direction axiale, complètement dans la région de l'ouverture de ventilateur. De cette manière, on peut notamment employer un moule de coulée simple lors de la fabrication, car aucune contre-dépouille n'est formée par l'élément de butée dans la direction axiale.

Par exemple, l'élément de butée s'appuie par le biais de bras s'étendant dans la direction axiale et radiale sur le reste du support de filtre, notamment sur le bord de l'ouverture de ventilateur et/ou est réalisé sous forme annulaire, de sorte qu'aucun support ponctuel ne soit présent.

Conformément à l'invention, un module de filtre pour une installation de ventilation ou un climatiseur de véhicule présente un filtre à air et un support de filtre décrit ci-dessus, le filtre à air ne s'appliquant contre la surface d'appui du support de filtre à air qu'au niveau de sa région de bord radiale, et étant disposé dans des conditions de fonctionnement normales de manière espacée axialement de l'élément de butée.

La géométrie du support de filtre et du filtre à air ainsi que la stabilité mécanique du filtre sont adaptées l'une à l'autre de telle sorte que le filtre à air, dans des conditions de fonctionnement normales, ne se déforme que de manière négligeable et ne soit pas pressé contre l'élément de butée, ce qui d'une part réduit la formation de bruits et d'autre part permet d'obtenir un bon flux d'air à travers toute la section transversale du filtre à air.

De préférence, la distance entre le filtre à air et l'élément de butée, dans des conditions de fonctionnement normales ou en l'absence d'un écoulement traversant, est comprise entre 3 et 5 mm.

Une réalisation rigide du filtre à air est possible si l'étendue du filtre à air dans la direction axiale mesure au moins 25 mm.

Par exemple, le filtre à air présente un cadre de filtre dans lequel est disposé un matériau de filtre plié, le cadre de filtre s'appliquant contre la surface d'appui du support de filtre.

L'objet de l'invention est en outre réalisé par une installation de ventilation ou de climatiseur de véhicule avec un ventilateur et une chambre de filtre, qui présente au moins une entrée d'air frais, l'installation présentant un module de filtre décrit ci-dessus.

D'autres caractéristiques et avantages résultent de la description suivante et des dessins, auxquels on fera référence, et dans lesquels :
- la figure 1 illustre une vue en coupe schématique d'une installation de ventilation ou d'un climatiseur de véhicule selon l'invention,
- la figure 2 illustre une vue en perspective d'un support de filtre selon l'invention de l'installation de ventilation ou du climatiseur de véhicule de la figure 1,
- la figure 3 illustre une vue de dessus du support de filtre selon la figure 2 dans la direction axiale, et
- la figure 4 illustre une vue de détail de l'élément de butée du support de filtre selon la figure 2.

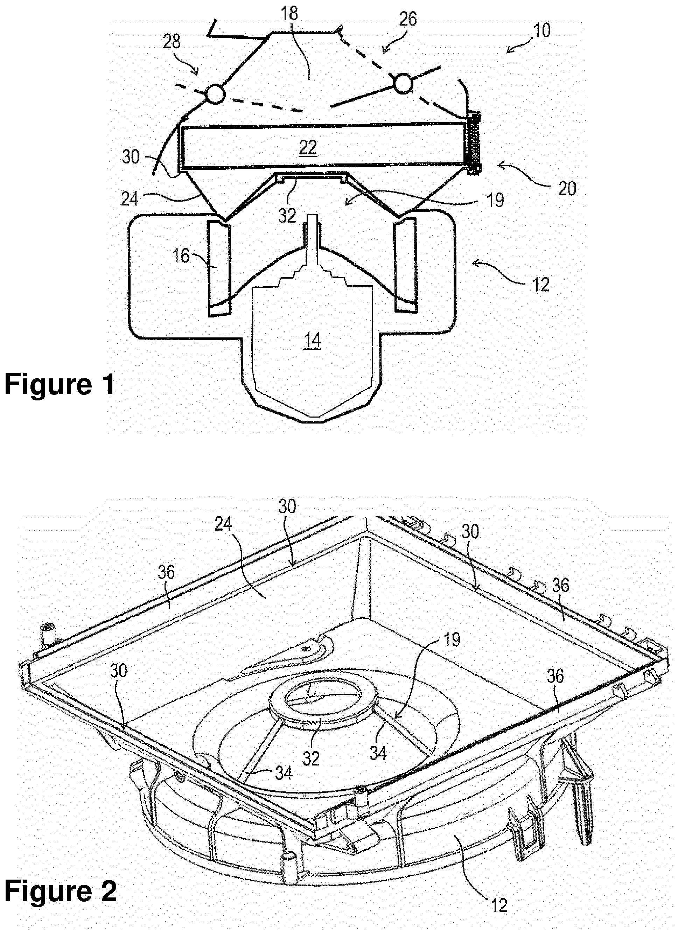

La figure 1 illustre une vue schématique d'une installation de ventilation ou d'un climatiseur de véhicule 10. L'installation de ventilation de véhicule 10 peut présenter un dispositif de chauffage et/ou de refroidissement et être ainsi réalisée sous forme de climatiseur, notamment sous forme d'installation HVAC (chauffage, ventilation et climatisation). L'installation 10 comprend un ventilateur 12 avec une hélice 16 entraînée par un moteur 14.

L'installation de ventilation ou le climatiseur de véhicule 10 comprend en outre une chambre de filtre 18 placée en amont par rapport au ventilateur 12, laquelle est raccordée au ventilateur 12 par le biais d'une ouverture de ventilateur 19. La chambre de filtre 18 présente un module de filtre 20 avec un filtre à air remplaçable 22, qui est reçu dans un support de filtre 24. Une entrée d'air frais 26 et une entrée d'air de recyclage 28 dans la chambre de filtre 18 sont prévues en amont du filtre à air 22. La direction de la liaison d'écoulement du filtre à air 22 et de l'ouverture de ventilateur 19 définit une direction axiale du module de filtre 20 ou du support de filtre 24.

Le filtre à air 22 comprend un matériau de filtre plié qui est disposé dans un cadre de filtre qui forme la région de bord radiale du filtre à air 22. L'étendue axiale du filtre à air 22 dans la direction axiale vaut au moins 25 mm. De cette manière, une relativement grande stabilité mécanique du filtre à air 22, notamment par flexion du matériau de filtre, est garantie. Il est toutefois aussi possible que le filtre à air 22 présente une autre forme de construction.

Le filtre à air 22 s'applique au niveau de sa région de bord radiale contre une surface d'appui 30 du support de filtre 24 et est positionné de cette manière dans la chambre de filtre 18 au moins dans la direction axiale. La surface d'appui 30 est formée par un épaulement périphérique dans le support de filtre 26. La partie du support de filtre 26 qui est remplie par le filtre à air 22, est l'espace recevant le filtre à air 26. Comme le filtre à air 22 ne s'applique contre la surface d'appui 30 du support de filtre 24 que dans sa région de bord radiale, un écoulement optimal à travers le filtre à air 22 est possible. En particulier, la surface d'appui 30 définit un plan.

Le support de filtre 24 présente en outre un élément de butée 32 qui est disposé dans la direction axiale entre la surface d'appui 30 et l'ouverture de ventilateur 19 et qui limite un mouvement dans le cas d'une déformation du filtre à air 22 dans la direction axiale.

La distance entre le filtre à air 22 et l'élément de butée 32 est choisie de telle sorte que le filtre à air 22 soit espacé axialement de l'élément de butée 32 dans des conditions de fonctionnement normales. De cette manière, le filtre à air 22 n'entre pas en contact avec l'élément de butée 32 dans des conditions de fonctionnement normales, même en cas de vibrations du filtre dues à des variations de pression dans la chambre de filtre 18, et une formation de bruits dans l'installation de ventilateur de véhicule 10 est réduite.

La distance entre le filtre à air 22 et l'élément de butée 32, dans des conditions de fonctionnement normales, est comprise entre 3 et 5 mm. Cette distance est de préférence choisie en fonction des propriétés mécaniques du filtre à air 22.

Dans des conditions extrêmes, par exemple dans le cas où le filtre à air 22 est trempé ou fortement encrassé, celui-ci peut se déformer fortement, l'élément de butée 32 limitant un mouvement axial maximal du filtre à air 22. De cette manière, une déformation excessive du filtre à air 22 est évitée, laquelle réduirait le fonctionnement du filtre ou pourrait permettre la pénétration de matériau de filtre dans l'ouverture de ventilateur 19.

Dans la forme de réalisation illustrée, la direction axiale, c'est-à-dire la direction de la liaison d'écoulement du filtre à air 22 et de l'ouverture de ventilateur 19, coïncide avec divers axes de symétrie d'autres composants de l'installation de ventilation de véhicule 10, par exemple l'axe de rotation de l'hélice 16 ou un axe de symétrie de révolution du filtre à air 22. Les composants de l'installation de ventilation de véhicule 10 peuvent toutefois aussi être disposés dans d'autres orientations que la direction axiale, par exemple le filtre à air 22 peut être disposé obliquement par rapport à la direction axiale.

Le support de filtre 24 va être décrit en détail ci-dessous à l'aide des figures 2, 3 et 4. Le support de filtre 24 est réalisé sous forme de composant intégral d'une seule pièce en plastique, du support de filtre 24, et peut être fabriqué de manière économique par un procédé de moulage par injection.

Le fond du support de filtre 24 limite la région aval de la chambre de filtre 18, qui est réalisée dans la forme de réalisation illustrée sous forme de tronc de pyramide. La surface de base et la surface de dessus du tronc de pyramide sont réalisées sous forme rectangulaire, avec une longueur de côté approximativement identique dans chaque cas.

Une ouverture de ventilateur circulaire 19 est disposée centralement dans un fond du support de filtre 24.

Dans la forme de réalisation illustrée, le support de filtre est réalisé sous forme de composant commun avec une partie de boîtier du ventilateur 12. Il est aussi possible que le support de filtre 24 soit réalisé sous forme de composant indépendant du ventilateur 12, l'ouverture de soufflante 19 pouvant dans ce cas être formée par le support de filtre 24 et/ou un composant du ventilateur 12.

Le côté supérieur de l'élément de butée 32 est espacé dans la direction axiale de 3 à 5 mm de la surface d'appui 30 pour le filtre à air 22.

L'élément de butée 32 est réalisé sous forme annulaire, de sorte que le support du filtre à air 22 est amélioré dans des conditions extrêmes, et qu'en même temps une grande section transversale d'écoulement du filtre à air 22 est garantie.

L'élément de butée 32 s'appuie par le biais de trois bras 34 s'étendant dans la direction axiale et radiale, c'est-à-dire obliquement, contre le fond de la chambre de filtre, notamment contre le bord de l'ouverture de ventilateur 19. De cette manière, un positionnement sûr de l'élément de butée 32 dans la chambre de filtre 18 est possible, tandis que l'allure de l'écoulement dans la chambre de filtre 18 n'est que faiblement modifiée.

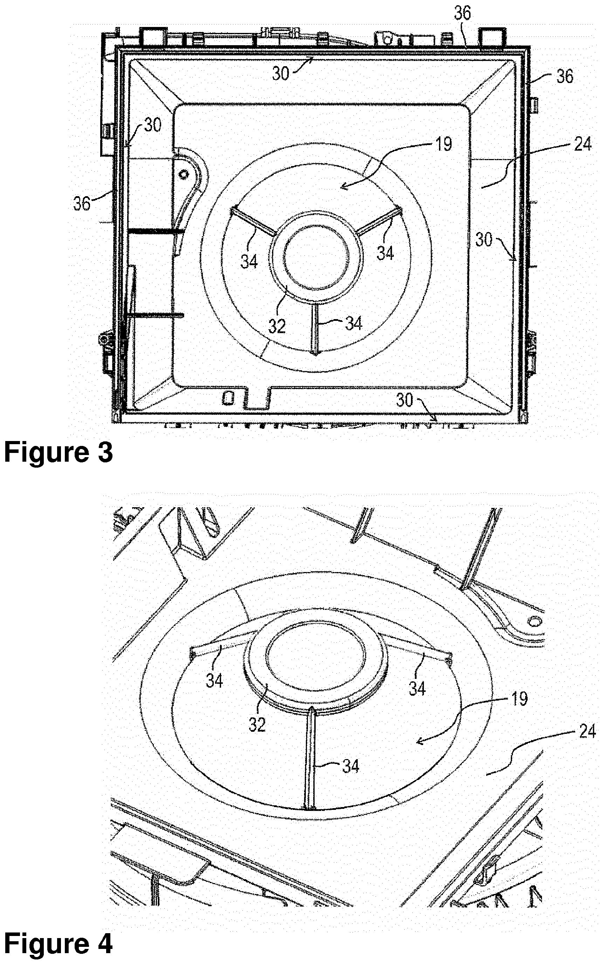

Comme on peut le voir clairement notamment dans la figure 3, l'élément de butée 32 est disposé, vu dans la direction axiale, complètement dans la région de l'ouverture de ventilateur 19. De cette manière, le support de filtre 24 ne présente, dans la direction axiale, dans la région de l'élément de butée 32, aucune contre-dépouille. Ceci permet une réalisation simple d'un moule de moulage par injection pour le support de filtre, de sorte qu'une fabrication économique est possible.

A côté de la surface d'appui 30 sont prévues, sur trois côtés extérieurs radiaux du support de filtre 24, des parois 36 pour le positionnement radial du filtre à air 22 dans le support de filtre 24, qui délimitent du côté des bords l'espace pour le montage du filtre 22. Le filtre à air 22 peut être enfoncé et ressorti par le quatrième côté du support de filtre 24 par déplacement dans la direction radiale dans le support de filtre 24.

En outre, une pluralité d'éléments de fixation sont réalisés d'une seule pièce sur le support de filtre 24, lesquels sont prévus pour la fixation du support de filtre 24 sur d'autres composants de l'installation de ventilation de véhicule 10, en particulier le ventilateur 12 et d'autres composants de la chambre de filtre 18.

## Revendications

1. Support de filtre (24) pour une installation de ventilation ou un climatiseur de véhicule (10), comprenant une surface d'appui (30) pour le positionnement axial d'un filtre à air (22) dans le support de filtre (24) et une ouverture de ventilateur (19) espacée de la surface d'appui (30) dans la direction axiale, pour le raccordement à un ventilateur (12) de l'installation de ventilation ou du climatiseur de véhicule (10), et la surface d'appui (30) étant prévue exclusivement dans une région de bord radiale d'un espace recevant le filtre à air (22), et un élément de butée (32) étant prévu, lequel étant disposé dans la direction axiale entre la surface d'appui (30) et l'ouverture de ventilateur (19), afin de limiter un mouvement du filtre à air (22) dans la direction axiale, le support de filtre (24) étant réalisé sous forme de composant intégral d'une seule pièce.

2. Support de filtre selon la revendication 1, **caractérisé en ce que** l'élément de butée (32) est espacé dans la direction axiale de 3 à 5 mm de la surface d'appui (30) pour le filtre à air (22).

3. Support de filtre selon l'une quelconque des revendications précédentes, **caractérisé en ce que** l'élément de butée (32) est disposé, vu dans la direction axiale, complètement dans la région de l'ouverture de ventilateur (19).

4. Support de filtre selon l'une quelconque des revendications précédentes, **caractérisé en ce que** l'élément de butée (32) est supporté et/ou réalisé sous forme annulaire sur le reste du support de filtre par le biais de bras (34) s'étendant dans la direction axiale et radiale.

5. Module de filtre (20) pour une installation de ventilation ou un climatiseur de véhicule (10), comprenant un filtre à air (22) et un support de filtre (24) selon l'une quelconque des revendications précédentes, le filtre à air (22) s'appliquant au niveau de sa région de bord radiale contre la surface d'appui (30) du support de filtre (24) et étant espacé axialement de l'élément de butée (32) dans des conditions de fonctionnement normales.

6. Module de filtre selon la revendication 5, **caractérisé en ce que** la distance entre le filtre à air (22) et l'élément de butée (32) est comprise entre 3 et 5 mm dans des conditions de fonctionnement normales.

7. Module de filtre selon la revendication 5 ou 6, **caractérisé en ce que** l'étendue du filtre à air (22) dans la direction axiale est d'au moins 25 mm.

8. Module de filtre selon l'une quelconque des revendications 5 à 7, **caractérisé en ce que** le filtre à air (22) présente un cadre de filtre dans lequel est disposé un matériau de filtre plié, le cadre de filtre s'appliquant contre la surface d'appui (30) du support de filtre (24).

9. Installation de ventilation ou climatiseur de véhicule (10) comprenant un ventilateur (12) et une chambre de filtre (18), présentant au moins une entrée d'air frais (26) et un module de filtre (20) selon l'une quelconque des revendications 5 à 8.

## Patentansprüche

1. Filterhalterung (24) für eine Lüftungsanlage oder eine Fahrzeug-Klimaanlage (10), die eine Auflagefläche (30) für die axiale Positionierung eines Luftfilters (22) in der Filterhalterung (24) und eine Lüfteröffnung (19) in Abstand zur Auflagefläche (30) in axialer Richtung für den Anschluss an einen Lüfter (12) der Lüftungsanlage oder die Fahrzeug-Klimaanlage (10) enthält, und wobei die Auflagefläche (30) ausschließlich in einem radialen Randbereich eines den Luftfilter (22) aufnehmenden Raums vorgesehen ist, und ein Anschlagelement (32) vorgesehen ist, das in der axialen Richtung zwischen der Auflagefläche (30) und der Lüfteröffnung (19) angeordnet ist, um eine Bewegung des Luftfilters (22) in der axialen Richtung zu begrenzen, wobei die Filterhalterung (24) in Form eines einstückigen integralen Bestandteils hergestellt wird.

2. Filterhalterung nach Anspruch 1, **dadurch gekennzeichnet, dass** das Anschlagelement (32) in der axialen Richtung einen Abstand von 3 bis 5 mm zur Auflagefläche (30) für den Luftfilter (22) hat.

3. Filterhalterung nach einem der vorhergehenden Ansprüche, **dadurch gekennzeichnet, dass** das Anschlagelement (32) in axialer Richtung gesehen vollständig im Bereich der Lüfteröffnung (19) angeordnet ist.

4. Filterhalterung nach einem der vorhergehenden Ansprüche, **dadurch gekennzeichnet, dass** das Anschlagelement (32) auf dem Rest der Filterhalterung mit Hilfe von Armen (34), die sich in der axialen und radialen Richtung erstrecken, getragen und/oder ringförmig hergestellt wird.

5. Filtermodul (20) für eine Lüfteranlage oder eine Fahrzeug-Klimaanlage (10), das einen Luftfilter (22) und eine Filterhalterung (24) nach einem der vorhergehenden Ansprüche enthält, wobei der Luftfilter (22) sich im Bereich seines radialen Randbereichs gegen die Auflagefläche (30) der Filterhalterung (24) anlegt und unter normalen Betriebsbedingungen axial einen Abstand zum Anschlagelement (32) hat.

6. Filtermodul nach Anspruch 5, **dadurch gekennzeichnet, dass** der Abstand zwischen dem Luftfilter (22) und dem Anschlagelement (32) unter normalen Betriebsbedingungen zwischen 3 und 5 mm liegt.

7. Filtermodul nach Anspruch 5 oder 6, **dadurch gekennzeichnet, dass** die Ausdehnung des Luftfilters (22) in axialer Richtung mindestens 25 mm beträgt.

8. Filtermodul nach einem der Ansprüche 5 bis 7, **dadurch gekennzeichnet, dass** der Luftfilter (22) einen Filterrahmen aufweist, in dem ein gefaltetes Filtermaterial angeordnet ist, wobei der Filterrahmen sich gegen die Auflagefläche (30) der Filterhalterung (24) anlegt.

9. Lüftungsanlage oder Fahrzeug-Klimaanlage (10) mit einem Lüfter (12) und einer Filterkammer (18), die mindestens einen Frischlufteinlass (26) und ein Filtermodul (20) nach einem der Ansprüche 5 bis 8 aufweist.

## Claims

1. Filter mounting (24) for a vehicle ventilation installation or air-conditioning unit (10), comprising a bearing surface (30) for the axial positioning of an air filter (22) in the filter mounting (24) and a fan opening (19), spaced apart from the bearing surface (30) in the axial direction, for connection to a fan (12) of the vehicle ventilation installation or air-conditioning unit (10),
and the bearing surface (30) being provided exclusively in a radial rim region of a space receiving the air filter (22),
and a stop element (32) being provided, this being arranged between the bearing surface (30) and the fan opening (19), as seen in the axial direction, in order to limit a movement of the air filter (22) in the axial direction, the filter mounting (24) being created in the form of an integral one-piece component.

2. Filter mounting according to Claim 1, **characterized in that** the axial distance between the stop element (32) and the bearing surface (30) for the air filter (22) is between 3 and 5 mm.

3. Filter mounting according to either one of the preceding claims, **characterized in that** the stop element (32) is arranged, as seen in the axial direction, entirely in the region of the fan opening (19).

4. Filter mounting according to any one of the preceding claims, **characterized in that** the stop element (32) is mounted and/or created in annular form on the rest of the filter mounting by means of arms (34) that extend in the axial and radial direction.

5. Filter module (20) for a vehicle ventilation installation or air-conditioning unit (10), comprising an air filter (22) and a filter mounting (24) according to any one of the preceding claims, the air filter (22) bearing, at its radial rim region, against the bearing surface (30) of the filter mounting (24), and being axially spaced apart from the stop element (32) under normal operating conditions.

6. Filter module according to Claim 5, **characterized in that** the distance between the air filter (22) and the stop element (32), under normal operating conditions, is between 3 and 5 mm.

7. Filter module according to Claim 5 or 6, **characterized in that** the axial extent of the air filter (22) is at least 25 mm.

8. Filter module according to any one of Claims 5 to 7, **characterized in that** the air filter (22) has a filter frame in which there is arranged a folded filter material, the filter frame bearing against the bearing surface (30) of the filter mounting (24) .

9. Vehicle ventilation installation or air-conditioning unit (10), comprising a fan (12) and a filter chamber (18), having at least a fresh air inlet (26) and a filter module (20) according to any one of Claims 5 to 8.
